# EUROPÄISCHE PATENTSCHRIFT

(11) **EP 2 046 472 B1**
(45) Veröffentlichungstag und Bekanntmachung des Hinweises auf die Patenterteilung: **13.02.2013**
(21) Anmeldenummer: 07787752.0
(22) Anmeldetag: 20.07.2007
(51) Int. Cl.: B01D 29/21, B01D 46/52, B01D 46/24, B01D 46/42

(54) **ZYLINDRISCHES FILTERELEMENT**
CYLINDRICAL FILTER ELEMENT
ÉLÉMENT DE FILTRE CYLINDRIQUE

(30) Priorität: 03.08.2006 DE 202006011993 U
(43) Veröffentlichungstag der Anmeldung: 15.04.2009
(73) Patentinhaber: Mann + Hummel GmbH, 71638 Ludwigsburg (DE)
(72) Erfinder: DWORATZEK, Klemens, 68535 Edingen (DE)
(86) Internationale Anmeldenummer: PCT/EP2007/057497
(87) Internationale Veröffentlichungsnummer: WO 2008/015109

(56) Entgegenhaltungen:
- WO-A-2004/080568
- WO-A-2006/010987
- DE-A1- 10 106 526
- DE-A1- 10 354 315
- US-A1- 2005 035 053

## Beschreibung

### Technisches Gebiet

Die Erfindung betrifft ein zylindrisches Filterelement mit einem zylinderrohrförmigen Balg, der an seinen Stirnseiten mit einer Endscheibe abgeschlossen ist.

### Stand der Technik

Solche Filterelemente werden in radialer Richtung durchströmt, insbesondere von außen angeströmt, so dass die schmutzbefrachtete Luft an dem Filterbalg gereinigt wird und die gefilterte Luft in das Innere des zylindrischen Filterbalgs ausströmt. Die Endscheiben dienen der Luftführung wie auch der Stabilisierung und der dichten Verbindung mit einem Filtergehäuse, in das das Filterelement einsetzbar ist. Wenigstens eine der Endscheiben ist ringförmig ausgebildet, um den Austritt der Reinluft aus dem Inneren des zylinderrohrförmigen Balgs zu ermöglichen.

Für die Herstellung des Filterbalgs sind wegen der guten Verarbeitbarkeit, den vergleichsweise geringen Kosten und der guten Filterwirkung Papierwerkstoffe nach wie vor bevorzugt. Diese weisen jedoch naturgemäß den Nachteil auf, dass sich die Fasergeometrie der zellulosehaltigen Fasern durch Feuchtigkeitseinfluss ändert. Insbesondere ist bei einem Filterelement die Längenänderung problematisch, da besondere Vorkehrungen getroffen werden müssen, um Filterelemente, die witterungsbedingt unterschiedliche Längen aufweisen können, allzeit abgedichtet in einem Gehäuse anordnen zu können. Daher sind beispielsweise ringförmige Dichtungen aus einem weichen Polyurethan-Schaum an den Endscheiben vorgesehen, die über größere Wege komprimierbar sind und einen Toleranzausgleich ermöglichen, die aber auch zusätzliche Kosten verursachen und die, je nach der witterungsbedingten Länge des Filterelements, zwischen festen Einspannstellen im Gehäuse mit verschiedenem Druck beaufschlagt werden, so dass keine reproduzierbare Abdichtung des Filterelements gegenüber dem Gehäuse zu erzielen ist.
Aus der WO 2006/010987 A1 ist ein Mikro-Filterelement mit einem perforierten inneren Kern und einem Verschlusselement mit axialen Fortsätzen bekannt.
Aus der WO 2004/080568 A1 ist ein Hydraulikfilter mit zwei Endscheiben bekannt, die sich axial erstreckende Verbindungselemente zum Verbinden der Endscheiben aufweisen.
Aus der US 2005/0035053 A1 ist ein Filterelement bekannt, welches eine UV-Lampe umschließt.
Aus der DE 103 54 315 A1 ist ein Filterelement bekannt, welches eine Endscheibe aufweist, auf welche eine elastische Dichtmasse aufgebracht ist. Aus der DE 101 06 526 A1 ist ein Filterelement mit einem Mittelrohr bekannt, welches einen Endbereich aufweist, der in eine Endscheibe eingebettet ist.

Aufgabe der Erfindung ist es somit, ein Filterelement der eingangs genannten Art so zu verbessern, dass Längenänderungen des Filterbalgs besser kompensiert werden können.

### Offenbarung der Erfindung

Diese Aufgabe wird bei einem Filterelement mit einem zylinderrohrförmigen Balg, der an seinen Stirnseiten mit einer Endscheibe abgeschlossen ist, dadurch gelöst, dass der Filterbalg ein Mittelrohr umschließt und dass eine als Festlager dienende Endscheibe vorgesehen ist, welche fest mit dem Mittelrohr verbunden ist und dass eine zweite Endscheibe als Loslager ausgebildet ist, wobei die zweite Endscheibe ringförmig ausgebildet ist und über eine innen liegende radiale Dichtung an das Mittelrohr angeschlossen ist.

Damit kann sich die zweite Endscheibe bei Längenänderungen des Filterbalgs entlang des Mittelrohrs verschieben bzw. umgekehrt, wobei durch die dazwischen liegende Ringdichtung stets die Abdichtung gegenüber dem Außenumfang des Mittelrohrs gewährleistet ist. Das Mittelrohr bildet den inneren Luftweg und kann an wenigstens einem Punkt fest mit dem Gehäuse verbunden werden. Über das Mittelrohr ist zudem eine Belastung des Filterelements mit Zugkräften möglich.

Die erste Endscheibe kann einstückig mit dem Mittelrohr ausgebildet sein oder in sonstiger Weise, beispielsweise über Schnappverbindungen, fest damit verbunden sein.

Erfindungsgemäß ist vorgesehen, dass ein äußerer Bereich der Endscheibe mit einem inneren Ringbereich, der das Mittelrohr umfasst, über mehrere radial angeordnete, speichenartige Streben verbunden ist, wobei der mit den Streben überbrückte Zwischenraum durch eine elastische Dichtmasse überdeckt ist, so dass eine axiale Dichtung an der ersten Endscheibe gebildet ist, über welche das Filterelement z. B. an einem Boden eines Filtergehäuses abgedichtet werden kann.

Möglich ist weiterhin, sowohl an der als Loslager dienenden zweiten Endscheibe wie auch an der ersten Endscheibe eine radiale Dichtung zwischen dem Innenrand der ringförmigen Endscheibe und dem Mittelrohr auszubilden.

Besonders bevorzugt ist eine Ausführungsform, bei der der Klebstoff zur endseitigen Verbindung des Filterbalgs mit der Endscheibe durch einen elastomeren Werkstoff gebildet ist, welcher die Rückseite der Endscheibe bedeckt und an einer ringförmigen Öffnung der Endscheibe nach außen austritt, so dass an der ringförmigen Öffnung zugleich eine Ringdichtung ausgebildet ist.

Besonders vorteilhaft ist es, dass gleich ausgebildete Endscheiben verwendet werden können: am Loslager ist ein Abschnitt des Mittelrohrs durch die Ausnehmung in der Endscheibe geführt und dort mit einer Ringdichtung abgedichtet, die sich bis an das Mittelrohr innerhalb der zentralen Ausnehmung anlegt. Am Festlager wird die gleiche Endscheibe verwendet. Dabei kann ebenfalls die radiale Ringdichtung zur Abdichtung gegenüber einem Mantelbereich am Mittelroh vorgesehen sein.

Da im letzten Fall mit zwei radialen Dichtungen aber noch das Mittelrohr gegenüber dem Filtergehäuse abzudichten wäre, ist es in den meisten Fällen besser, an der gleichen Endscheibe eine axiale Dichtung vorzusehen und damit das Filterelement am Festlager fest und dicht mit dem Filtergehäuse, insbesondere mit dem Gehäuseboden, zu verbinden.

### Kurze Beschreibung der Zeichnungen

Weitere Ausführungsformen der Erfindung sind den weiteren Unteransprüchen zu entnehmen und werden nachfolgend mit Bezug auf die Zeichnungen näher erläutert. Die Figuren zeigen im Einzelnen:
- Fig. 1: ein Filterelement in perspektivischer Ansicht,
- Fig. 2: ein Filterelement in einem perspektivischen Längsschnitt,
- Fig. 3: ein Detail des Kopfbereichs des Filterelements gemäß Fig. 1,
- Fig. 4: ein Detail des Fußbereichs des Filterelements gemäß Fig. 1,
- Fig. 5: ein Schnittdetail des Kopfbereichs und
- Fig. 6: ein Schnittdetail des Fußbereichs.

### Ausführungsform(en) der Erfindung

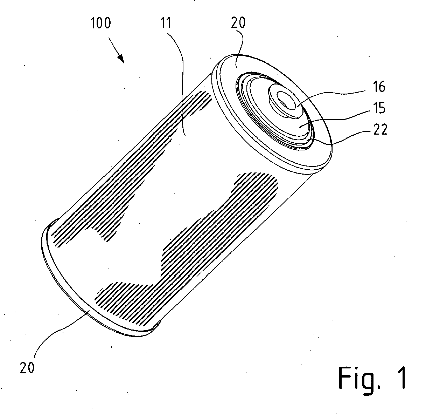

Fig. 1 zeigt eine Filtereinheit 100 in komplett montierter Form. Ein zylinderrohrförmiger Filterbalg 11 ist stirnseitig jeweils von ringförmigen Endscheiben 20 abgeschlossen. Im Kopfbereich 1 tritt eine Kappe 15 eines im Inneren des Filterbalgs angeordneten Mittelrohrs aus der inneren Ausnehmung in der Endscheibe 20 heraus, wobei der dazwischen liegende Spalt durch eine radial wirkende Ringdichtung 22 abgedichtet ist.

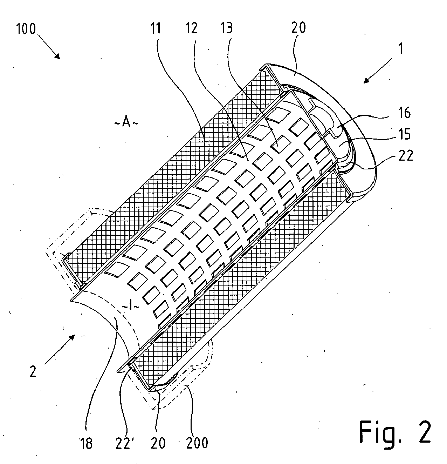

Fig. 2 zeigt das Filterelement 100 im Schnitt, wobei auch das Mittelrohr 12 erkennbar ist, das durch das innere des Filterbalgs 11 hindurch läuft und Durchbrechungen 13 aufweist, um eine radiale Luftströmung von einer Außenseite A her in einen Innenraum I zu ermöglichen.

Im Kopfbereich 1 ist das Mittelrohr 12 mit einer Kappe 15 versehen, die den freien Strömungsquerschnitt vollständig abdichtet. Ein Überstand 16 ist angeformt, um im Wartungsfall das Filterelement 100 mit den Fingern ergreifen zu können und um eine formschlüssige Verrieglung innerhalb eines Filtergehäuses bewirken zu können, die gleichwohl eine axiale Verschiebbarkeit erlaubt.

Im gegenüberliegenden Fußbereich 2 umschließt die ringförmige Endscheibe 20 einen Überstand 18 des Mittelrohrs 12. Hier ist der Innenraum I offen, um ein Abströmen der gefilterten Luft zu ermöglichen.

Eine ringförmige Dichtung 22'an der Endscheibe 20 wird axial an eine geeignete Ringfläche in einem Filtergehäuse 200 angepresst, um eine Leckströmung von der Filteraußenseite A zu der Filterinnenseite I zu vermeiden. An dieser Stelle ist ein Festlager gebildet, an dem das Filterelement 100 mit dem Filtergehäuse 200 fest verbunden ist, wobei die Ringdichtung 22'axial verpresst wird.

Im Kopfbereich 1 hingegen wird an der Kappe 15 des Mittelrohrs 12 lediglich eine radiale Abdichtung bewirkt, um zu verhindern, dass Luft von der Außenseite in den Spalt zwischen der Kappe 15 und dem Filterbalg 11 einströmen kann.

Das starre und als Zuganker verwendbare Mittelrohr 12, das insbesondere als Kunststoffteil ausgebildet ist, kann eine im Vergleich zum umgebenden Filterbalg 11 unterschiedliche Längenänderung vollziehen. Findet eine auf unterschiedlichen Längenänderungen beruhende Relativbewegung zwischen dem Filterbalg 11 mit der endseitig angeklebten Endscheibe 20 gegenüber der Kappe 15 des Mittelrohrs 12 statt, so kann der Umfangsbereich der Kappe 15 axial durch die Dichtung 22 gleiten, ohne dass es zu einer Beschädigung des Filterelements 100, wie beispielsweise einem Abriss der Dichtung oder dergleichen, kommt.

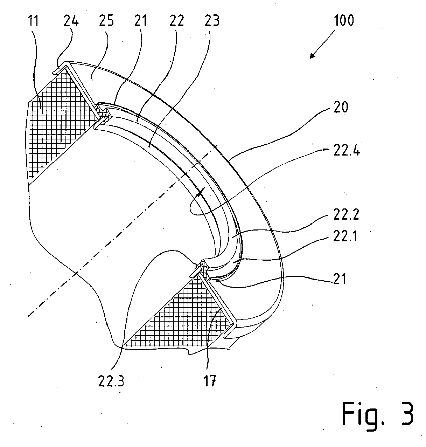

Fig. 3 zeigt den Kopfbereich mit der radial wirkenden Dichtung 22 an der Endscheibe 20 im Detail. Zur besseren Darstellung ist das Mittelrohr hier nicht gezeigt.

An seiner Stirnseite im Kopfbereich ist der Filterbalg 11 über eine Klebschicht 17 mit der ringförmigen Endscheibe 20 fest verbunden. Die Endscheibe 20 hat einen Kragrand 24, der sich außen über den kantennahen Umfangsbereich des Filterbalgs 11 stülpt und einen Kantenschutz bewirkt. Es schließt sich eine weitgehend glatte, geschlossene Ringfläche 25 an, die an einem Steg 21 mündet, welcher die äußere Begrenzung der Dichtung 22 bildet. Nach innen ist die Endscheibe 20 durch einen Ringbereich 23 abgeschlossen, wobei der Bereich 25 und der Bereich 23 über radiale Streben miteinander verbunden sind, die von der Ringdichtung 22 überdeckt sind und daher in der vorliegenden Darstellung nicht sichtbar sind.

An der Ringdichtung 22 erstreckt sich vom Steg 21 her nach innen zunächst ein Bereich 22.1, der ohne gesonderte Dichtungsfunktion ist und lediglich den Spalt zwischen den Bereichen 23, 25 überbrückt. Ein überhöhter Querschnittsbereich 22.2 dient der Überdeckung der Oberkante des Ringbereichs 23. Von dort setzt sich der überhöhte Bereich 22.2 in einer Dichtlippe 22.3 fort, die den Ringbereich 23 wenigstens teilweise überdeckt. Durch die Dichtlippe 22.3 und den überhöhten Bereich 22.2 ist eine zylindrische Dichtfläche 22.4 geschaffen, innerhalb der das Mittelrohr 12 verschieblich eingeschlossen ist.

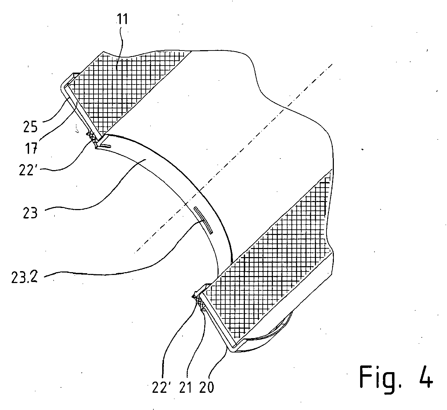

Fig. 4 zeigt den als Festlager dienenden Fußbereich 2 des Filterelements 100. Eine weitere Endscheibe 20 schließt den Filterbalg 11 ab. Unterschiedlich im Vergleich zum Kopfbereich ist nur, dass die Querschnittsfläche zwischen dem Ringbereich 23 und dem Steg 21 mit einer Dichtmasse gefüllt ist, um eine axial wirkende Ringdichtung 22 auszubilden. Wie durch die Rastrippen 23.2 angedeutet, kann das Mittelrohr 12 fest verrastet werden, um seine relative Lage gegenüber dem Filterbalg 11 samt Endscheibe 20 und Dichtung 22' zu fixieren und somit ein Festlager auszubilden.

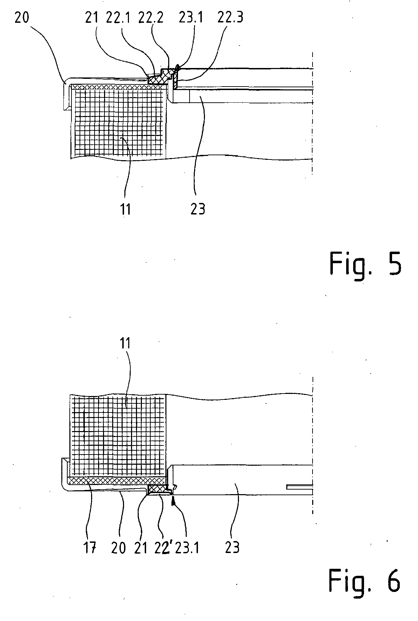

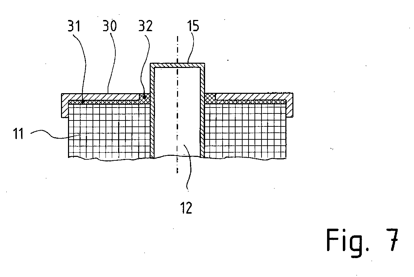

Insbesondere durch die Darstellung der Fig. 5 und 6 wird ein besonderer Vorteil einer bevorzugten Ausführungsform der vorliegenden Erfindung deutlich: Fest- und Loslager können nämlich mit einer gleichartig ausgebildeten Endscheibe 20 ausgebildet werden, an die jeweils nur eine unterschiedliche Dichtung 22 bzw. 22'angesetzt oder angeformt wird.

Fig. 5 zeigt im Querschnitt durch den Kopfbereich 1 die Dichtung 22 mit dem flachen Bereich 22.1, dem überhöhten Bereich 22.2 und der sich anschließenden Dichtlippe 22.3, die radial nach innen den inneren Ringbereich 23 der Endscheibe 20 überdeckt.

Fig. 6 zeigt dieselbe Endscheibe 20 in umgekehrter Lage im Fußbereich 2. Während die Endscheibe 20 an sich unverändert gegenüber der Endscheibe im Kopfbereich 1 ausgebildet ist, füllt die Dichtmasse 22' in diesem Fall den Bereich zwischen den Stegen 21 und 23.1 aus, überdeckt jedoch den Steg 23.1 als Oberkante des Ringbereichs 23 nicht.

## Patentansprüche

1. Zylindrisches Filterelement (100) mit einem Mittelrohr und mit einem zylinderrohrförmigen Balg (11), der an seinen Stirnseiten (1, 2) jeweils mit einer Endscheibe (20; 30) abgeschlossen ist, wobei der Filterbalg (11) das Mittelrohr (12) umschließt und eine als Festlager dienende Endscheibe (20; 30) vorgesehen ist, welche relativ zum Mittelrohr (12) festgelegt oder mit diesem verbunden ist, wobei ein äußerer Bereich (25) der Endscheibe (20) mit einem inneren Ringbereich (23), der das Mittelrohr (12) umschließt, über mehrere radial angeordnete Streben verbunden ist, wobei der mit den Streben überbrückte Zwischenraum durch eine Ringdichtung (22, 22') überdeckt ist, so dass eine axiale Dichtung an der ersten Endscheibe gebildet ist, und wobei eine zweite Endscheibe (20; 30) als Loslager ausgebildet ist, wobei die zweite Endscheibe (20; 30) ringförmig ausgebildet ist und über eine innen liegende radiale Ringdichtung (22, 32) an das Mittelrohr (12) angeschlossen ist.

2. Zylindrisches Filterelement (100) nach Anspruch 1, **dadurch gekennzeichnet, dass** die Endscheibe (20) am Festlager einstückig mit dem Mittelrohr (12) ausgebildet ist.

3. Zylindrisches Filterelement (100) nach Anspruch 1, **dadurch gekennzeichnet, dass** die Endscheibe (20) am Festlager über eine Schnapp- oder Rastverbindung (23.2) mit dem Mittelrohr (12) verbunden ist.

## Claims

1. Cylindrical filter element (100) with a central tube and with a bellows (11) in the shape of a cylinder tube which is closed at each of its front faces (1, 2) with an end plate (20; 30), wherein the filter bellows (11) encloses the central tube (12) and en end plate (20; 30) serving as fixed bearing is provided which is fixed in relation to the central tube (12) or connected with it, wherein an outer area (25) of the end plate (20) is connected via radially disposed struts with an inner annular area (23) which encloses the central tube (12), wherein the interstice bridged by the struts is covered by an annular sealing (22, 22') so that an axial sealing is formed at the first end plate, and wherein a second end plate (20; 30) is formed as floating bearing, wherein the second end plate (20; 30) has an annular design and is connected with the central tube (12) via an interior radial annular sealing (22; 32).

2. Cylindrical filter element (100) according to claim 1, **characterized in that** the end plate (20) at the fixed bearing is formed in one piece with the central tube (12).

3. Cylindrical filter element (100) according to claim 1, **characterized in that** the end plate (20) at the fixed bearing is connected by means of a snap-fit connection or a snap-in connection (23.2) with the central tube (12).

## Revendications

1. Élément filtrant (100) cylindrique avec un tube central et avec un soufflet (11) en forme de tube cylindrique dont les faces frontales (1, 2) se terminent par respectivement un disque d'extrémité (20 ; 30), le soufflet de filtre (11) encerclant le tube central (12) et un disque d'extrémité (20 ; 30) servant de palier fixe étant prévu, ce palier étant fixe par rapport au tube central (12) ou étant relié à ce tube, une zone extérieure (25) du disque d'extrémité (20) étant reliée, au moyen de plusieurs entretoises disposées en sens radial, à une zone annulaire intérieure (23) qui encercle le tube central (12), l'interstice comblé avec les entretoises étant recouvert par un joint annulaire (22, 22') de sorte à former un joint axial au niveau du premier disque d'extrémité, et un deuxième disque d'extrémité (20 ; 30) étant réalisé en tant que palier mobile, le deuxième disque d'extrémité (20 ; 30) étant de forme annulaire et étant relié au tube central (12) par l'intermédiaire d'un joint annulaire (22, 32) radial intérieur.

2. Élément filtrant (100) cylindrique selon la revendication 1, **caractérisé en ce que** le disque d'extrémité (20) du palier fixe est exécuté en un seul bloc avec le tube central (12).

3. Élément filtrant (100) cylindrique selon la revendication 1, **caractérisé en ce que** le disque d'extrémité (20) du palier fixe est relié au tube central (12) au moyen d'un raccord à enclenchement ou à crans (23.2).
